# EUROPEAN PATENT SPECIFICATION

(11) **EP 3 537 085 B1**
(45) Date of publication and mention of the grant of the patent: **28.08.2024**
(21) Application number: 19161456.9
(22) Date of filing: 07.03.2019
(51) Int. Cl.: F28D 7/00, F28D 9/00, F28F 1/02, F28F 1/26, F28F 9/04

(54) **GANGED PLATE STACK IN CAST PLATE FIN HEAT EXCHANGER**
VERBUNDENER PLATTENSTAPEL IN GEGOSSENEM PLATTENLAMELLENWÄRMETAUSCHER
EMPILEMENT DE PLAQUE RACCORDÉE DANS UN ÉCHANGEUR DE CHALEUR À AILETTES ET PLAQUE COULÉE

(30) Priority: 07.03.2018 US 201815914055
(43) Date of publication of application: 11.09.2019
(73) Proprietor: RTX Corporation, Farmington, CT 06032 (US)
(72) Inventor: Disori, Michael A., Glastonbury, CT Connecticut 06033 (US); Stillman, William P., Sturbridge, MA Massachusetts 01566 (US); Diener, Adam J., Marlborough, CT Connecticut 06447 (US); Broulidakis, Alexander, Tolland, CT Connecticut 06084 (US); Hyland, David J., Portland, CT Connecticut 06480 (US); Styborski, Jeremy, Manchester, CT Connecticut 06040 (US)
(74) Representative: Dehns

(56) References cited:
- EP-A2- 0 213 792
- US-A- 3 981 354
- US-A1- 2009 321 060
- US-A1- 2012 199 334

## Description

### BACKGROUND

A plate fin heat exchanger includes adjacent flow paths that transfer heat from a hot flow to a cooling flow. The flow paths are defined by a combination of plates and fins that are arranged to transfer heat from one flow to another flow. The plates and fins are created from sheet metal material brazed together to define the different flow paths. Thermal gradients present in the sheet material create stresses that can be very high in certain locations. The stresses are typically largest in one corner where the hot side flow first meets the coldest portion of the cooling flow. In an opposite corner where the coldest hot side flow meets the hottest cold side flow the temperature difference is much less resulting in unbalanced stresses across the heat exchanger structure. Increasing temperatures and pressures can result in stresses on the structure that can exceed material and assembly capabilities.

Turbine engine manufactures utilize heat exchangers throughout the engine to cool and condition airflow for cooling and other operational needs. Improvements to turbine engines have enabled increases in operational temperatures and pressures. The increases in temperatures and pressures improve engine efficiency but also increase demands on all engine components including heat exchangers.

Turbine engine manufacturers continue to seek further improvements to engine performance including improvements to thermal, transfer and propulsive efficiencies.

A prior art plate fin heat exchanger having the features of the preamble of claim 1 is disclosed in US 3 981 354 A.

### SUMMARY

In an aspect of the present invention, a plate fin heat exchanger is provided, as set forth in claim 1.

In an embodiment, a second cast plate assembly includes a second inlet perimeter attached to the outlet perimeter of the first cast plate assembly at an intermediate joint and the outlet manifold is attached to the outlet perimeter of the second cast plate assembly.

In another embodiment according to any of the previous embodiments, the first cast plate assembly includes a plurality of fin portions that extend from top and bottom surface of the plate portions.

In another embodiment according to any of the previous embodiments, the inlet manifold and the outlet manifold include a first passage in communication with the first cast plate assembly and a second passage in communication with the second cast plate assembly.

In another embodiment according to any of the previous embodiments, the at least two plate portions include three plate portions including a top plate portion, an intermediate plate portion and bottom plate portion with a cooling channel defined on either side of the intermediate plate portion.

In another embodiment according to any of the previous embodiments, the at least two plate portions include four plate portions including a top plate portion, a first intermediate plate portion, a second intermediate plate portion and a bottom plate portion with the cooling channel defined between the plate portions.

In another embodiment according to any of the previous embodiments, the inlet joint includes a brazed joint between the inlet perimeter and an internal surface of the inlet manifold and the outlet joint includes a brazed joint between the outlet perimeter and an internal surface of the outlet manifold.

In another embodiment according to any of the previous embodiments, the common inlet perimeter and the common outlet perimeter include smooth surfaces on outer surfaces of opposing distal ends.

In another embodiment according to any of the previous embodiments, the common inlet perimeter and the common outlet perimeter are parts separate from the first cast plate assembly.

In another embodiment according to any of the previous embodiments, the common inlet perimeter and the common outlet perimeter are integral parts of the first cast plate assembly.

In another embodiment according to any of the previous embodiments, the cast plate assembly includes a single unitary cast item.

In another embodiment, the plate fin heat exchanger further comprises a second cast plate assembly including at least two plate portions separated by at least one cooling channel. Each of the two plate portions include a plurality of internal passages extending between a corresponding plurality of inlets and outlets. The second cast plate assembly includes a inlet perimeter surrounding the plurality of inlets of the second cast plate assembly that is attached to the outlet perimeter of the first cast plate assembly. The outlet manifold is attached at an outlet joint to the outlet perimeter of the second cast plate assembly.

In an embodiment, the first cast plate assembly and the second cast plate assembly both include a plurality of fin portions that extend from top and bottom surfaces of the plate portions.

In another embodiment according to any of the previous embodiments, the inlet perimeter and the outlet perimeter are parts separate from the first cast plate assembly and the second cast plate assembly.

In another embodiment according to any of the previous embodiments, the inlet perimeter and the outlet perimeter are integral parts of the first cast plate assembly and the second cast plate assembly.

In another embodiment according to any of the previous embodiments, first cast plate assembly and the second cast plate assembly each include separate unitary cast items.

In another aspect of the present invention, a method of assembling a heat exchanger is provided, as set forth in claim 14.

In an embodiment, second cast plate assembly is joined between the first cast plate assembly and the outlet manifold. The second cast plate assembly is identical to the first cast plate assembly and a second inlet perimeter of the second cast plate assembly is joined to the first outlet perimeter of the first cast plate assembly at an intermediate joint and a second outlet perimeter of the second cast plate assembly is jointed at the outlet joint to the outlet manifold.

In another embodiment according to any of the previous embodiments, the first cast plate assembly and the second cast plate assembly both include a plurality of fin portions extending from top and bottom surfaces of the at least two plate portions.

In another embodiment according to any of the previous embodiments, first cast plate assembly and the second cast plate assembly each include separate unitary cast items.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example heat exchanger embodiment.
Figure 2 is a side view of the example heat exchanger embodiment.
Figure 3 is a perspective view of a cast plate assembly embodiment.
Figure 4 is an exploded view of example heat exchanger assembly embodiment.
Figure 5 is a perspective view of another heat exchange assembly embodiment.
Figure 6 is another cast plate heat assembly embodiment.
Figure 7 is a perspective view of an example cast plate heat assembly embodiment.
Figure 8 is a schematic view of a method of assembling a cast plate fin heat exchanger.

### DETAILED DESCRIPTION

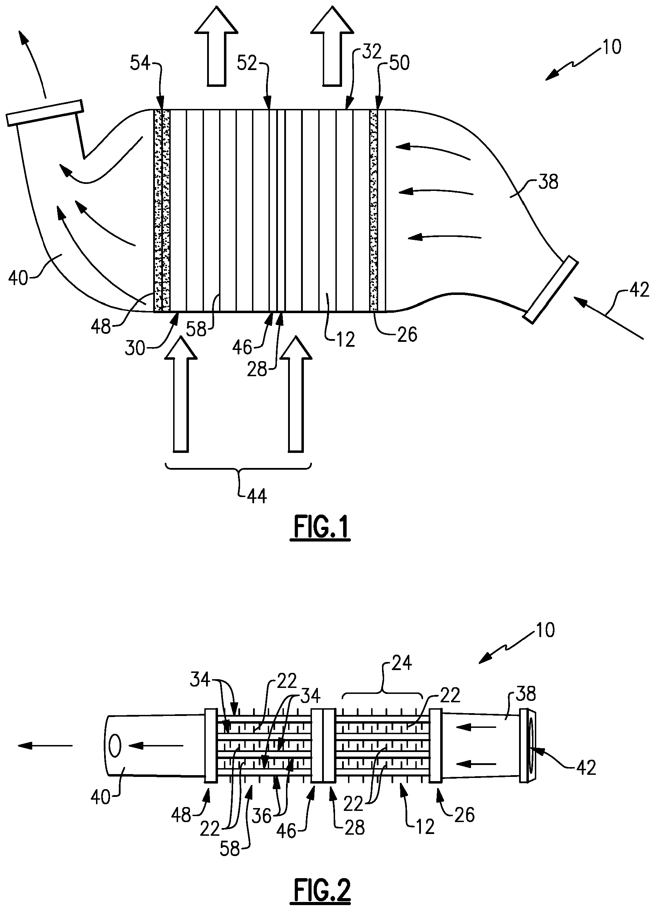

Referring to Figures 1 and 2, an example a heat exchanger 10 includes an inlet manifold 38 and an outlet manifold 40, a first cast plate 12, and second cast plate 58. The first cast plate 12 is attached to the intake manifold 38 at a first joint 50. The first cast plate 12 is attached to the second cast plate 58 at an intermediate joint 52. The second cast plate 58 is attached to the exhaust or outlet manifold 40 at an outlet joint 54. The example heat exchanger 10 utilizes one piece unitary cast plates 12, 58 to provide the cooling flow channels for cooling air flow 44 and the channels for a hot flow 42. Moreover, the example heat exchanger 10 utilizes the one-piece cast plates 12, 58 to simplify assembly and substantially reduce the number of brazed joints required in the example heat exchanger assembly 10.

Each of the cast plates 12, 58 includes a leading edge 30, a top surface 34, a bottom surface 36 and a trailing edge 32. Cooling airflow 44 enters cooling channels 22 disposed between plate portions 14 defined as part each of cast plates 12, 58. Fin portions 24 extend from top and bottom surfaces of each of the plate portions 14.

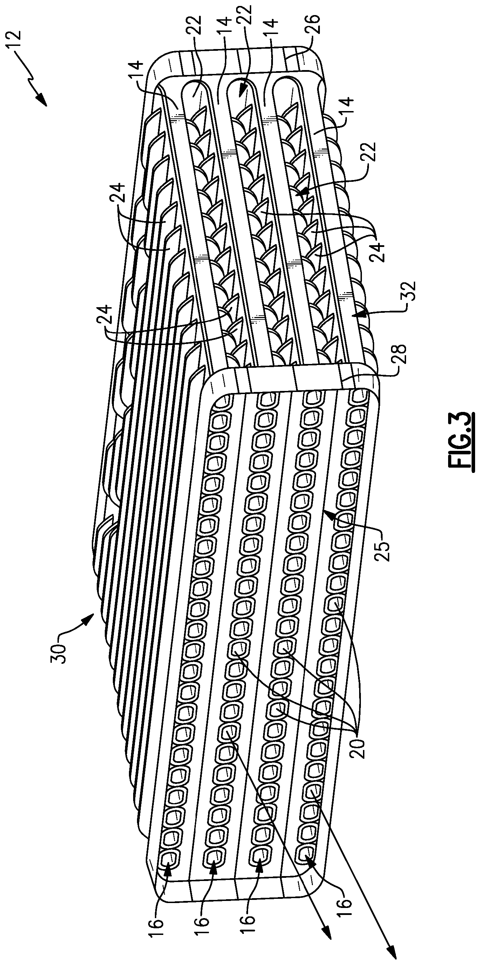

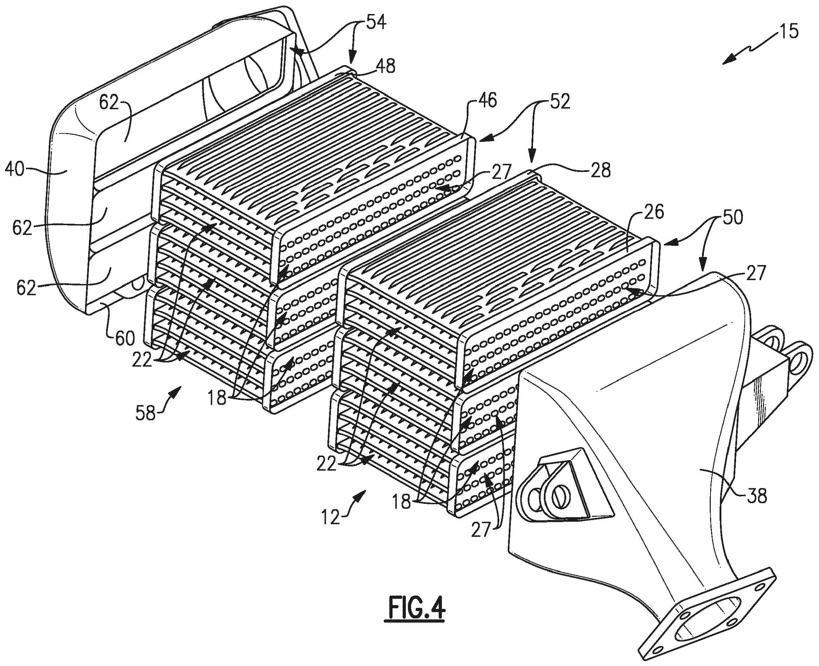

Referring to Figure 3, with continued reference to Figures 1 and 2, the first cast plate assembly 12 is illustrated in a perspective view and includes a single unitary cast structure with plate portions 14 that extend between the leading edge 30 and the trailing edge 32. Each of the plate portions 14 define a plurality of internal passages 16 that extend between a corresponding plurality of inlets 18 (Figure 4) and outlets 20. The outlets 20 from each of the plate portions 14 are shown in Figure 3 and are disposed on a common outlet face 25. The common outlet face 25 is a surface that provides for each of the outlets 20 from the different plate portions 14 to open within a common plane. The inlets 18 are similarly disposed on a common inlet face 27 (Figure 4) on the other side of the case plate 12 (Shown in Figure 4).

The plurality of fins portions 24 extend from top and bottom surfaces 34, 36 of each of the plate portions 14. The cooling airflow through the cooling channels 22 flows between the plurality of fin portions 24 disposed on each of the plate portions 14.

The disclosed example cast plate 12 includes four plate portions 14 that define internal passages 16. Between the plate portions 14 are the cooling channels 22 for the cooling air flow 44. In this example there are three cooling channels 22 disposed between the four plate portions 14. Cooling air flow 44 will also flow over the top and bottom of the cast plate 12.

The plurality of inlets 18 and the plurality of outlets 20 are surrounded by a corresponding inlet perimeter and outlet perimeter 26, 28. The inlet perimeter 26 surrounds and defines an outer border around the inlets 18 on the common inlet face 27. The outlet perimeter 28 surrounds and defines an outer border around the outlets 20 on the common outlet face 25. The outlet perimeter 28 includes a smooth machined or ground surface that mates with an inner surface of the exhaust manifold 40.

Referring to Figure 4 with continued reference to Figure 3 another example heater exchanger assembly 15 is shown and includes the inlet manifold 38, the exhaust manifold 40 and a plurality cast plates 12. In this example there are three identical first cast plates 12 attached to three second cast plates 58. The first cast plates 12 are attached to the second cast plates 58 at an intermediate joint 52. The intermediate joint 52 is provided as a brazed joint between the first cast plates 12 and the second cast plates 58. An inlet joint 50 is provided between the inlet perimeter 26 of the first cast plates 12 and the inlet manifold 38. An outlet joint 54 is provided between the outlet perimeter 48 of the second cast plates 58 and the exhaust manifold 40. The exhaust manifold 40 includes an inner mating surface 60 that mates to the outlet perimeter 48 at the outlet joint 54.

It should be appreciated that although identical plates are shown and disclosed by way of example that different cast plates 12 can be used to address application specific requirements.

In this example each of the intake manifold 38 and the exhaust manifold 40 includes separate sections illustrated at 62. Although not shown, the intake manifold 38 includes separate sections similar to those shown in the exhaust manifold 40. Each of the separate sections 62 correspond to one of the separate cast plates 12, 58 mated to the either the inlet manifold 38 or the outlet manifold 40. Although the example inlet manifold 38 and exhaust manifold 40 are shown and disclosed by way of example as including separate sections 62, a single open area to each of the inlet manifold 38 and exhaust manifold could also be utilized and is within the contemplation of this disclosure. Moreover, any combination of separate sections would also work with the cast plates 12, 58 disclosed by way of example.

The example heat exchanger 15 includes three first cast plates 12 stacked one on top of the other that are joined to the inlet manifold 38 at one of the separate portions 62. Each of the inlet manifold 38 and the exhaust manifold 40 includes the interior mating surface 60 that receives a corresponding one of the cast plates 12, 58.

As appreciated the example heat exchanger illustrated in Figure 4 utilizes six cast plates 12, 58 of a common configuration and enable scaling the capacity of the heat exchanger 15 to meet application specific requirements and needs. The number of cast plates 12, 58 can be varied along with the orientation relative to each other to provide a heat exchanger of a desired capacity. More cast plates 12, 58 could be stacked upon one another to expand the heat exchanger vertically. Moreover, additional cast plates 12, 58 could be attached to each other to expand the heat exchanger lengthwise.

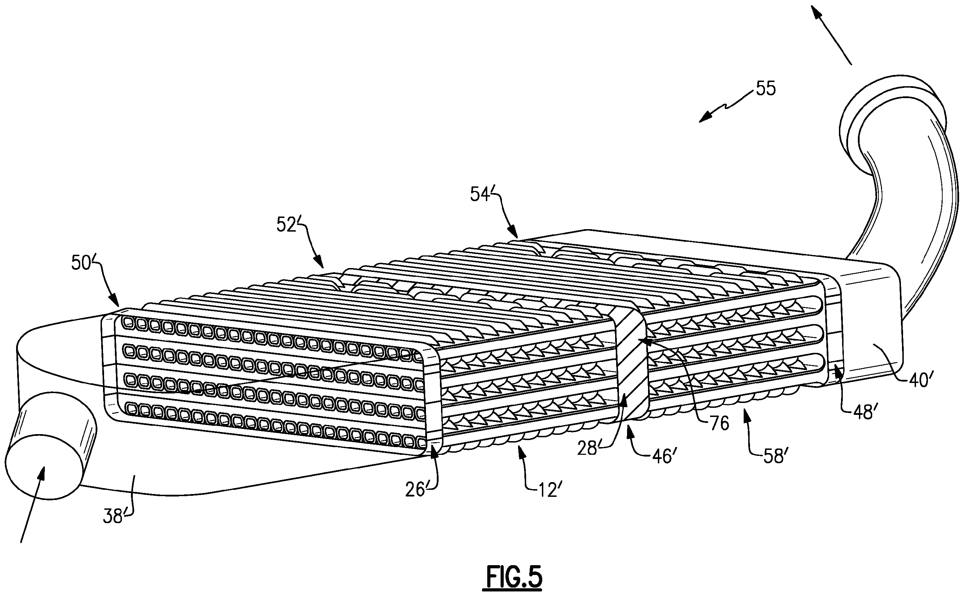

Referring to Figure 5, another heat exchanger assembly 55 is shown and include a first cast plate 12' attached to a second cast plate 58'. Only one row of two cast plates 12', 58' are provided to provide the desired heat exchanging capacity. The first cast plate 12' is attached to the second cast plate 58 at an intermediate joint 52'. The first cast plate 12' is attached to the inlet manifold 38 at an inlet joint 50' and the second cast plate 58' is attached to the outlet manifold 40 at an outlet joint 54'. The first cast plate 12' includes an inlet perimeter 26' that provides the interface with the inlet manifold 38 at the inlet joint 50'. The second cast plate 58' includes an outlet perimeter 48' that provides the interface with the outlet manifold 40'. The intermediate joint 52' is defined between an outlet perimeter 28' if the first cast plate 12' and an inlet perimeter 46' of the second cast plate 58'. The outlet perimeter 28' may be attached directly to the inlet perimeter 46'. Alternatively, a band 76 could be wrapped around the two perimeters 28', 46' to aid in forming the intermediate joint 52'.

The joints 50, 52, 54, 50', 52' and 54' are disclosed by way of example as brazed joints. However, other joining and welding processes and method as are known could be utilized and are within the contemplation of this disclosure. For example, friction welding, laser welding and plasma welding may be utilized for form one or all of the disclosed joints. Additionally, the number of joints required to form the disclosed example heat exchangers are significantly reduced as compared to traditional heat exchanger construction and therefore enables the use of welding, brazing techniques not previously practical.

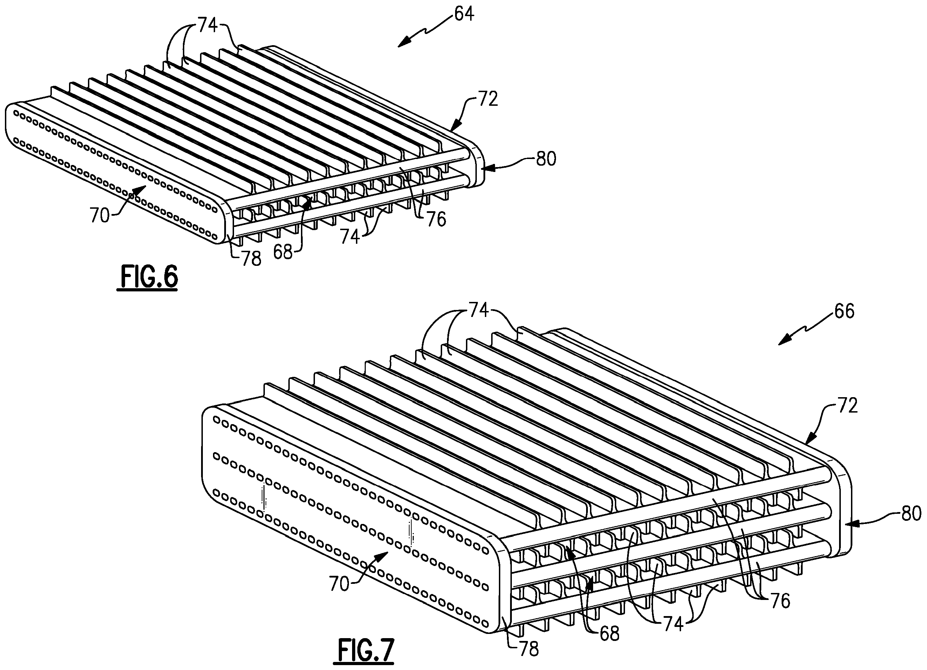

Referring to Figures 6 and 7, although the previous example embodiments have included plate assemblies 12' and 58' that include four plate portions 14 and three cooling flow channels other cast plate configuration could be utilized and are within the contemplation of this disclosure.

Figure 6 illustrates an example cast plate 64 with two plate portions 76 disposed between an inlet face 70 and outlet face 72. Each of the plate portions 76 include a plurality of fins 74 and form the cooling flow channel 68 there between.

Referring to Figure 7, another cast plate 66 is illustrated and includes three plate portions 76 forming two cooling channels 68 there between. Each of the plate portions 76 includes internal passages that extend between a corresponding plurality of inlets and outlets similar to the previous disclosed cast plate 12 shown in Figure 4.

Both cast plates 64 and 66 include inlet perimeters 78 and outlet perimeters 80 that surround the corresponding inlet face 70 and outlet face 72. The perimeters 78, 80 provide a surface for forming a desired joint with another cast plate or a manifold.

Each of disclosed cast plates 12, 58, 12', 58', 64 and 66 are single one piece unitary cast structures that are formed complete with internal passages, fin portions and perimeters. Secondary machining to refine the joint surfaces defined at the perimeters is all that may be desired. The inclusion of the fin portion with the plate portions as a casting eliminates many joints that can complicate assembly and limit operational capabilities.

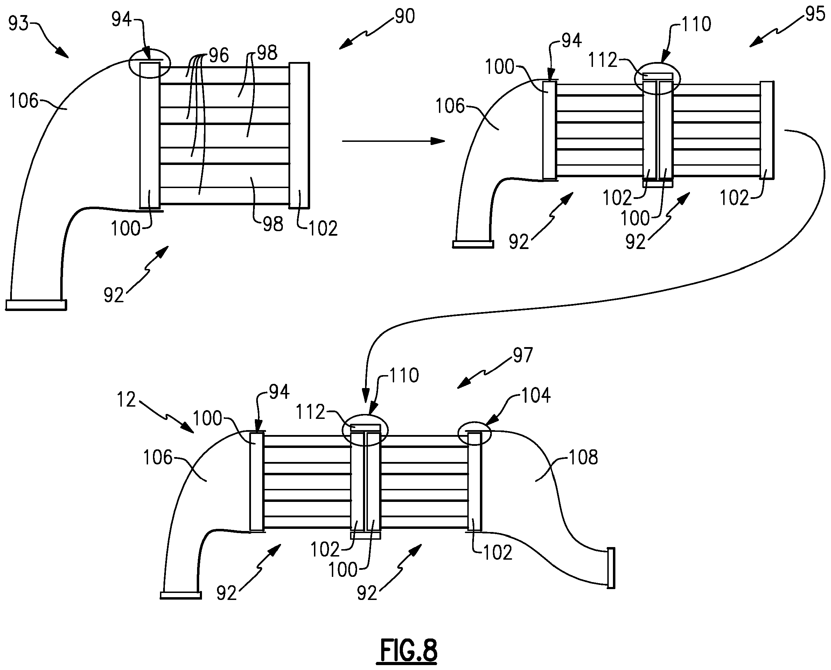

Referring to Figure 8 with continued reference to Figures 3 and 4, an example method of assembling a heat exchanger 10 is schematically shown and generally indicated at 90 and includes an initial of step shown at 93 of mating a first cast plate 92 to an inlet manifold 106 at an inlet joint 94. The inlet joint 94 is provided as a brazed or welded joint between an inlet perimeters 100 an interior surface of the inlet manifold 106. The cast plate 92 includes plate portions 96 and cooling channels 98 between the plate portions 96. Once the inlet manifold 106 is joined to the cast plate 92, a second cast plate 92 is attached to the first cast plate as is indicated at 95. An intermediate joint 110 is formed using a band 112 that surrounds both the outlet perimeter 102 of the first cast plate 92 and an inlet perimeter 100 of the second cast plate 92.

In this disclosed example, the first cast plate 92 and the second cast plate are identically shaped and configured cast structures. Once the intermediate joint 110 is complete, the exhaust manifold 108 is joined at an outlet joint 104 as indicated at 97. The outlet joint 104 is also a brazed or welded joint between the outlet perimeter 102 and an inner surface of the exhaust manifold 108. Accordingly, the disclosed heat exchangers can be constructed with a minimal number of joints.

Moreover, the disclosed example heat exchangers maybe scaled up or down depending on application specific requirements by adding additional cast plates that are joined to corresponding manifolds in a serial or parallel manner.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A plate fin heat exchanger (15) comprising:
a first cast plate assembly (12) including at least two plate portions (14) separated by at least one cooling channel (22), each of the two plate portions (14) including a plurality of internal passages (16) extending between a corresponding plurality of inlets (18) and outlets (20), wherein a common inlet perimeter (26) surrounds the plurality of inlets (18) from each of the two plate portions (14) and a common outlet perimeter (28) surrounds the plurality of outlets (20) from each of the two plate portions (14);
an inlet manifold (38) attached at an inlet joint (50) to the inlet perimeter (26);
an outlet manifold (40) attached at an outlet joint to the outlet perimeter (28); and **characterised by**
at least one additional cast plate assembly (12) with an additional inlet perimeter attached at an additional inlet joint to the inlet manifold (38) and an additional outlet perimeter attached at an additional outlet j oint to the outlet manifold (40).

2. The plate fin heat exchanger as recited in claim 1, including a second cast plate assembly (58) including a second inlet perimeter (46) attached to the outlet perimeter (28) of the first cast plate assembly (12) at an intermediate joint (52) and the outlet manifold (40) is attached to an outlet perimeter (48) of the second cast plate assembly (58), such that the outlet manifold (40) is attached to the outlet perimeter (28) of the first cast plate assembly (12) via the second cast plate assembly (58).

3. The plate fin heat exchanger as recited in claim 1 or 2, wherein the first cast plate assembly (12) includes a plurality of fin portions (24) that extend from top and bottom surfaces (34, 36) of the plate portions (14).

4. The plate fin heat exchanger as recited in any preceding claim, wherein the inlet manifold (38) and the outlet manifold (40) include a first passage in communication with the first cast plate assembly (12) and a second passage in communication with the additional cast plate assembly (12).

5. The plate fin heat exchanger as recited in any preceding claim, wherein the at least two plate portions (14) comprise three plate portions (14) including a top plate portion, an intermediate plate portion and bottom plate portion with the cooling channel (22) defined on either side of the intermediate plate portion; or
four plate portions (14) including a top plate portion, a first intermediate plate portion, a second intermediate plate portion and a bottom plate portion with the cooling channel (22) defined between the plate portions (14).

6. The plate fin heat exchanger as recited in any preceding claim, wherein the inlet joint (50) comprises a brazed joint between the inlet perimeter (26) and an internal surface of the inlet manifold (38) and the outlet joint comprises a brazed joint between the outlet perimeter (28) and an internal surface (60) of the outlet manifold (40).

7. The plate fin heat exchanger as recited in any preceding claim, wherein the common inlet perimeter (26) and the common outlet perimeter (28) comprise smooth surfaces on outer surfaces of opposing distal ends.

8. The plate fin heat exchanger as recited in any preceding claim, wherein the common inlet perimeter (26) and the common outlet perimeter (28) are parts separate from the first cast plate assembly (12).

9. The plate fin heat exchanger as recited in any preceding claim, wherein the common inlet perimeter (26) and the common outlet perimeter (28) are integral parts of the first cast plate assembly (12).

10. The plate fin heat exchanger as recited in any preceding claim, wherein the first cast plate assembly (12) comprises a single unitary cast item.

11. The plate fin heat exchanger of claim 1, further comprising:
a second cast plate assembly (58) including at least two plate portions separated by at least one cooling channel (22), each of the two plate portions including a plurality of internal passages extending between a corresponding plurality of inlets (18) and a corresponding plurality of outlets, wherein the second cast plate assembly (58) includes an inlet perimeter (46) surrounding the plurality of inlets (18) of the second cast plate assembly (58) that is attached to the outlet perimeter (28) of the first cast plate assembly (12);
wherein the outlet manifold (40) is attached at an outlet joint (54) to an outlet perimeter (48) of the second cast plate assembly (58), such that the outlet manifold (40) is attached to the outlet perimeter (28) of the first cast plate assembly (12) via the second cast plate assembly (58); and optionally wherein the first cast plate assembly (12) and the second cast plate assembly (58) both include a plurality of fin portions (24) that extend from top and bottom surfaces (34, 36) of the plate portions (14).

12. The plate fin heat exchanger as recited in claim 11, wherein the inlet perimeters (26, 46) and the outlet perimeters (28, 48) are:
parts separate from the first cast plate assembly (12) and the second cast plate assembly (58); or
integral parts of the first cast plate assembly (12) and the second cast plate assembly (58).

13. The plate fin heat exchanger as recited in claim 11 or 12, wherein first cast plate assembly (12) and the second cast plate assembly (58) each comprise separate unitary cast items.

14. A method of assembling a heat exchanger (10) as defined in claim 1 comprising:
joining a first cast plate assembly (12) to an inlet manifold (38) at an inlet joint (50), wherein the first cast plate assembly (12) includes at least two plate portions (14) separated by at least one cooling channel (22) to the inlet manifold (38), wherein each of the at least two plate portions (14) includes a plurality of internal passages (16) extending between a corresponding plurality of inlets (18) and a corresponding plurality of outlets (20) and an inlet perimeter (26) surrounds the plurality of inlets (18) from each of the two plate portions (14) and an outlet perimeter (28) surrounds the plurality of outlets (20) from each of the two plate portions (14); and
joining an outlet manifold (40) at an outlet joint to the outlet perimeter (28) of the first cast plate assembly (12).

15. The method as recited in claim 14, further comprising joining a second cast plate assembly (58) between the first cast plate assembly (12) and the outlet manifold (40), wherein the second cast plate assembly (58) is identical to the first cast plate assembly (12) and an inlet perimeter (46) of the second cast plate assembly (58) is joined to the outlet perimeter (28) of the first cast plate assembly (12) at an intermediate joint (52) and an outlet perimeter (48) of the second cast plate assembly (58) is joined at the outlet joint to the outlet manifold (40), such that the outlet manifold (40) is attached to the outlet perimeter (28) of the first cast plate assembly (12) via the second cast plate assembly (58), optionally wherein the first cast plate assembly (12) and the second cast plate assembly (58):
both include a plurality of fin portions (24) extending from top and bottom surfaces (34, 36) of the at least two plate portions (12); and/or
each comprise separate unitary cast items.

## Patentansprüche

1. Plattenlamellenwärmetauscher (15), umfassend:
eine erste gegossene Plattenbaugruppe (12), die mindestens zwei Plattenabschnitte (14) beinhaltet, die durch mindestens einen Kühlkanal (22) getrennt sind, wobei jeder der zwei Plattenabschnitte (14) eine Vielzahl von internen Durchgängen (16) beinhaltet, die sich zwischen einer entsprechenden Vielzahl von Einlässen (18) und Auslässen (20) erstreckt, wobei ein gemeinsamer Einlassrand (26) die Vielzahl von Einlässen (18) von jedem der zwei Plattenabschnitte (14) umgibt und ein gemeinsamer Auslassrand (28) die Vielzahl von Auslässen (20) von jedem der zwei Plattenabschnitte (14) umgibt;
einen Einlassverteiler (38), der an einer Einlassverbindung (50) an dem Einlassrand (26) befestigt ist;
einen Auslassverteiler (40), der an einer Auslassverbindung an dem Auslassrand (28) befestigt ist; und
**gekennzeichnet durch**
mindestens eine zusätzliche gegossene Plattenbaugruppe (12) mit einem zusätzlichen Einlassrand, der an einer zusätzlichen Einlassverbindung an dem Einlassverteiler (38) befestigt ist, und einem zusätzlichen Auslassrand, der an einer zusätzlichen Auslassverbindung an dem Auslassverteiler (40) befestigt ist.

2. Plattenlamellenwärmetauscher nach Anspruch 1, der eine zweite gegossene Plattenbaugruppe (58) beinhaltet, die einen zweiten Einlassrand (46) beinhaltet, der an einer Zwischenverbindung (52) an dem Auslassrand (28) der ersten gegossenen Plattenbaugruppe (12) befestigt ist, und der Auslassverteiler (40) an einem Auslassrand (48) der zweiten gegossenen Plattenbaugruppe (58) derart befestigt ist, dass der Auslassverteiler (40) über die zweite gegossene Plattenbaugruppe (58) an dem Auslassrand (28) der ersten gegossenen Plattenbaugruppe (12) befestigt ist.

3. Plattenlamellenwärmetauscher nach Anspruch 1 oder 2, wobei die erste gegossene Plattenbaugruppe (12) eine Vielzahl von Lamellenabschnitten (24) beinhaltet, die sich von einer Ober- und Unterseite (34, 36) der Plattenabschnitte (14) erstreckt.

4. Plattenlamellenwärmetauscher nach einem der vorhergehenden Ansprüche, wobei der Einlassverteiler (38) und der Auslassverteiler (40) einen ersten Durchgang in Verbindung mit der ersten gegossenen Plattenbaugruppe (12) und einen zweiten Durchgang in Verbindung mit der zusätzlichen gegossenen Plattenbaugruppe (12) beinhalten.

5. Plattenlamellenwärmetauscher nach einem der vorhergehenden Ansprüche, wobei die mindestens zwei Plattenabschnitte (14) drei Plattenabschnitte (14) umfassen, die einen oberen Plattenabschnitt, einen mittleren Plattenabschnitt und einen unteren Plattenabschnitt beinhalten, wobei der Kühlkanal (22) auf jeder Seite des mittleren Plattenabschnitts definiert ist; oder
vier Plattenabschnitte (14) umfassen, die einen oberen Plattenabschnitt, eines ersten mittleren Plattenabschnitt, einen zweiten mittleren Plattenabschnitt und einen unteren Plattenabschnitt beinhalten, wobei der Kühlkanal (22) zwischen den Plattenabschnitten (14) definiert ist.

6. Plattenlamellenwärmetauscher nach einem der vorhergehenden Ansprüche, wobei die Einlassverbindung (50) eine Lötverbindung zwischen dem Einlassrand (26) und einer Innenfläche des Einlassverteilers (38) umfasst und die Auslassverbindung eine Lötverbindung zwischen dem Auslassrand (28) und einer Innenfläche (60) des Auslassverteilers (40) umfasst.

7. Plattenlamellenwärmetauscher nach einem der vorhergehenden Ansprüche, wobei der gemeinsame Einlassrand (26) und der gemeinsame Auslassrand (28) glatte Flächen auf Außenflächen von gegenüberliegenden distalen Enden umfassen.

8. Plattenlamellenwärmetauscher nach einem der vorhergehenden Ansprüche, wobei der gemeinsame Einlassrand (26) und der gemeinsame Auslassrand (28) von der ersten gegossenen Plattenbaugruppe (12) getrennte Teile sind.

9. Plattenlamellenwärmetauscher nach einem der vorhergehenden Ansprüche, wobei der gemeinsame Einlassrand (26) und der gemeinsame Auslassrand (28) integrale Teile der ersten gegossenen Plattenbaugruppe (12) sind.

10. Plattenlamellenwärmetauscher nach einem der vorhergehenden Ansprüche, wobei die erste gegossene Plattenbaugruppe (12) ein einzelnes einteiliges Gussteil umfasst.

11. Plattenlamellenwärmetauscher nach Anspruch 1, ferner umfassend:
eine zweite gegossene Plattenbaugruppe (58), die mindestens zwei Plattenabschnitte beinhaltet, die durch mindestens einen Kühlkanal (22) getrennt sind, wobei jeder der zwei Plattenabschnitte eine Vielzahl von internen Durchgängen beinhaltet, die sich zwischen einer entsprechenden Vielzahl von Einlässen (18) und einer entsprechenden Vielzahl von Auslässen erstreckt, wobei die zweite gegossene Plattenbaugruppe (58) einen Einlassrand (46) beinhaltet, der die Vielzahl von Einlässen (18) der zweiten gegossenen Plattenbaugruppe (58) umgibt, der an dem Auslassrand (28) der ersten gegossenen Plattenbaugruppe (12) befestigt ist;
wobei der Auslassverteiler (40) an einer Auslassverbindung (54) an einem Auslassrand (48) der zweiten gegossenen Plattenbaugruppe (58) derart befestigt ist, dass der Auslassverteiler (40) über die zweite gegossene Plattenbaugruppe (58) an dem Auslassrand (28) der ersten gegossenen Plattenbaugruppe (12) befestigt ist; und wobei optional sowohl die erste gegossene Plattenbaugruppe (12) als auch die zweite gegossene Plattenbaugruppe (58) eine Vielzahl von Lamellenabschnitten (24) beinhaltet, die sich von einer Ober- und Unterseite (34, 36) der Plattenabschnitte (14) erstreckt.

12. Plattenlamellenwärmetauscher nach Anspruch 11, wobei die Einlassränder (26, 46) und die Auslassränder (28, 48) Folgendes sind:
Teile, die von der ersten gegossenen Plattenbaugruppe (12) und der zweiten gegossenen Plattenbaugruppe (58) getrennt sind; oder integrale Teile der ersten gegossenen Plattenbaugruppe (12) und der zweiten gegossenen Plattenbaugruppe (58).

13. Plattenlamellenwärmetauscher nach Anspruch 11 oder 12, wobei die erste gegossene Plattenbaugruppe (12) und die zweite gegogssene Plattenbaugruppe (58) jeweils separate einheitliche Gussteile umfassen.

14. Verfahren zum Zusammenbauen eines Wärmetauschers (10) nach Anspruch 1, umfassend:
Verbinden einer ersten gegossenen Plattenbaugruppe (12) mit einem Einlassverteiler (38) an einer Einlassverbindung (50), wobei die erste gegossene Plattenbaugruppe (12) mindestens zwei Plattenabschnitte (14) umfasst, die durch mindestens einen Kühlkanal (22) von dem Einlassverteiler (38) getrennt sind, wobei jeder der mindestens zwei Plattenabschnitte (14) eine Vielzahl von internen Durchgängen (16) beinhaltet, die sich zwischen einer entsprechenden Vielzahl von Einlässen (18) und einer entsprechenden Vielzahl von Auslässen (20) erstreckt, und ein Einlassrand (26) die Vielzahl von Einlässen (18) von jedem der zwei Plattenabschnitte (14) umgibt und ein Auslassrand (28) die Vielzahl von Auslässen (20) von jedem der zwei Plattenabschnitte (14) umgibt; und
Verbinden eines Auslassverteilers (40) an einer Auslassverbindung mit dem Auslassrand (28) der ersten gegossenen Plattenbaugruppe (12).

15. Verfahren nach Anspruch 14, ferner umfassend Verbinden einer zweiten gegossenen Plattenbaugruppe (58) zwischen der ersten gegossenen Plattenbaugruppe (12) und dem Auslassverteiler (40), wobei die zweite gegossene Plattenbaugruppe (58) mit der ersten gegossenen Plattenbaugruppe (12) identisch ist und ein Einlassrand (46) der zweiten gegossenen Plattenbaugruppe (58) an einer Zwischenverbindung (52) mit dem Auslassrand (28) der ersten gegossenen Plattenbaugruppe (12) verbunden ist und ein Auslassrand (48) der zweiten gegossenen Plattenbaugruppe (58) an der Auslassverbindung mit dem Auslassverteiler (40) derart verbunden ist, dass der Auslassverteiler (40) über die zweite gegossenen Plattenbaugruppe (58) an dem Auslassrand (28) der ersten gegossenen Plattenbaugruppe (12) befestigt ist, wobei optional die erste gegossenen Plattenbaugruppe (12) und die zweite gegossenen Plattenbaugruppe (58):
beide eine Vielzahl von Lamellenabschnitten (24) beinhalten, die sich von einer Ober- und Unterseite (34, 36) der mindestens zwei Plattenabschnitte (12) erstreckt; und/oder
jeweils getrennte einheitliche Gussteile umfassen.

## Revendications

1. Échangeur de chaleur à ailettes et plaque (15) comprenant : un premier ensemble de plaques coulées (12) comportant au moins deux parties de plaque (14) séparées par au moins un canal de refroidissement (22), chacune des deux parties de plaque (14) comportant une pluralité de passages internes (16) se prolongeant entre une pluralité correspondante d'entrées (18) et de sorties (20), dans lequel un périmètre d'entrée commun (26) entoure la pluralité d'entrées (18) de chacune des deux parties de plaque (14) et un périmètre de sortie commun (28) entoure la pluralité de sorties (20) de chacune des deux parties de plaque (14) ;
un collecteur d'entrée (38) fixé au niveau d'un joint d'entrée (50) au périmètre d'entrée (26) ;
un collecteur de sortie (40) fixé au niveau d'un joint de sortie au périmètre de sortie (28) ; et
**caractérisé par**
au moins un ensemble de plaques coulées (12) supplémentaire avec un périmètre d'entrée supplémentaire fixé au niveau d'un joint d'entrée supplémentaire au collecteur d'entrée (38) et un périmètre de sortie supplémentaire fixé au niveau d'un joint de sortie supplémentaire au collecteur de sortie (40).

2. Échangeur de chaleur à ailettes et plaque selon la revendication 1, comportant un second ensemble de plaques coulées (58) comportant un second périmètre d'entrée (46) fixé au périmètre de sortie (28) du premier ensemble de plaques coulées (12) au niveau d'un joint intermédiaire (52) et le collecteur de sortie (40) est fixé à un périmètre de sortie (48) du second ensemble de plaques coulées (58), de sorte que le collecteur de sortie (40) est fixé au périmètre de sortie (28) du premier ensemble de plaques coulées (12) par l'intermédiaire du second ensemble de plaques coulées (58).

3. Échangeur de chaleur à ailettes et plaque selon la revendication 1 ou 2, dans lequel le premier ensemble de plaques coulées (12) comporte une pluralité de parties d'ailette (24) qui se prolongent depuis des surfaces supérieure et inférieure (34, 36) des parties de plaque (14).

4. Échangeur de chaleur à ailettes et plaque selon une quelconque revendication précédente, dans lequel le collecteur d'entrée (38) et le collecteur de sortie (40) comportent un premier passage en communication avec le premier ensemble de plaques coulées (12) et un second passage en communication avec l'ensemble de plaques coulées (12) supplémentaire.

5. Échangeur de chaleur à ailettes et plaque selon une quelconque revendication précédente, dans lequel les au moins deux parties de plaque (14) comprennent trois parties de plaque (14) comportant une partie de plaque supérieure, une partie de plaque intermédiaire et une partie de plaque inférieure avec le canal de refroidissement (22) défini de part et d'autre de la partie de plaque intermédiaire ; ou
quatre parties de plaque (14) comportant une partie de plaque supérieure, une première partie de plaque intermédiaire, une seconde partie de plaque intermédiaire et une partie de plaque inférieure avec le canal de refroidissement (22) défini entre les parties de plaque (14).

6. Échangeur de chaleur à ailettes et plaque selon une quelconque revendication précédente, dans lequel le joint d'entrée (50) comprend un joint brasé entre le périmètre d'entrée (26) et une surface interne du collecteur d'entrée (38) et le joint de sortie comprend un joint brasé entre le périmètre de sortie (28) et une surface interne (60) du collecteur de sortie (40).

7. Échangeur de chaleur à ailettes et plaque selon une quelconque revendication précédente, dans lequel le périmètre d'entrée commun (26) et le périmètre de sortie commun (28) comprennent des surfaces lisses sur des surfaces extérieures d'extrémités distales opposées.

8. Échangeur de chaleur à ailettes et plaque selon une quelconque revendication précédente, dans lequel le périmètre d'entrée commun (26) et le périmètre de sortie commun (28) sont des parties distinctes du premier ensemble de plaques coulées (12).

9. Échangeur de chaleur à ailettes et plaque selon une quelconque revendication précédente, dans lequel le périmètre d'entrée commun (26) et le périmètre de sortie commun (28) sont des parties intégrales du premier ensemble de plaques coulées (12).

10. Échangeur de chaleur à ailettes et plaque selon une quelconque revendication précédente, dans lequel le premier ensemble de plaques coulées (12) comprend un seul élément coulé unitaire.

11. Échangeur de chaleur à ailettes et plaque selon la revendication 1, comprenant en outre :
un second ensemble de plaques coulées (58) comportant au moins deux parties de plaque séparées par au moins un canal de refroidissement (22), chacune des deux parties de plaque comportant une pluralité de passages internes se prolongeant entre une pluralité correspondante d'entrées (18) et une pluralité correspondante de sorties, dans lequel le second ensemble de plaques coulées (58) comporte un périmètre d'entrée (46) entourant la pluralité d'entrées (18) du second ensemble de plaques coulées (58) qui est fixé au périmètre de sortie (28) du premier ensemble de plaques coulées (12) ;
dans lequel le collecteur de sortie (40) est fixé au niveau d'un joint de sortie (54) à un périmètre de sortie (48) du second ensemble de plaques coulées (58), de sorte que le collecteur de sortie (40) est fixé au périmètre de sortie (28) du premier ensemble de plaques coulées (12) par l'intermédiaire du second ensemble de plaques coulées (58) ; et éventuellement dans lequel le premier ensemble de plaques coulées (12) et le second ensemble de plaques coulées (58) comportent tous deux une pluralité de parties d'ailette (24) qui se prolongent à partir de surfaces supérieure et inférieure (34, 36) des parties de plaque (14).

12. Échangeur de chaleur à ailettes et plaque selon la revendication 11, dans lequel les périmètres d'entrée (26, 46) et les périmètres de sortie (28, 48) sont :
des pièces séparées du premier ensemble de plaques coulées (12) et du second ensemble de plaques coulées (58) ; ou
des pièces intégrales du premier ensemble de plaques coulées (12) et du second ensemble de plaques coulées (58).

13. Échangeur de chaleur à ailettes et plaque selon la revendication 11 ou 12, dans lequel le premier ensemble de plaque coulées (12) et le second ensemble de plaques coulées (58) comprennent chacun des éléments coulés unitaires séparés.

14. Procédé d'assemblage d'un échangeur de chaleur (10) tel que défini dans la revendication 1 comprenant :
le raccordement d'un premier ensemble de plaques coulées (12) à un collecteur d'entrée (38) au niveau d'un joint d'entrée (50), dans lequel le premier ensemble de plaques coulées (12) comporte au moins deux parties de plaque (14) séparées par au moins un canal de refroidissement (22) au collecteur d'entrée (38), dans lequel chacune des au moins deux parties de plaque (14) comporte une pluralité de passages internes (16) se prolongeant entre une pluralité correspondante d'entrées (18) et une pluralité correspondante de sorties (20) et un périmètre d'entrée (26) entoure la pluralité d'entrées (18) de chacune des deux parties de plaque (14) et un périmètre de sortie (28) entoure la pluralité de sorties (20) de chacune des deux parties de plaque (14) ; et
le raccordement d'un collecteur de sortie (40) au niveau d'un joint de sortie au périmètre de sortie (28) du premier ensemble de plaques coulées (12).

15. Procédé selon la revendication 14, comprenant en outre le raccordement d'un second ensemble de plaques coulées (58) entre le premier ensemble de plaques coulées (12) et le collecteur de sortie (40), dans lequel le second ensemble de plaques coulées (58) est identique au premier ensemble de plaques coulées (12) et un périmètre d'entrée (46) du second ensemble de plaques coulées (58) est raccordé au périmètre de sortie (28) du premier ensemble de plaques coulées (12) au niveau d'un joint intermédiaire (52) et un périmètre de sortie (48) du second ensemble de plaques coulées (58) est raccordé au niveau du joint de sortie au collecteur de sortie (40), de sorte que le collecteur de sortie (40) est fixé au périmètre de sortie (28) du premier ensemble de plaques coulées (12) par l'intermédiaire du second ensemble de plaques coulées (58), éventuellement dans lequel le premier ensemble de plaques coulées (12) et le second ensemble de plaques coulées (58) :
comportent tous deux une pluralité de parties d'ailette (24) se prolongeant à partir de surfaces supérieure et inférieure (34, 36) des au moins deux parties de plaque (12) ; et/ou comprennent chacun des éléments coulés unitaires séparés.
